(19) Europäisches Patentamt / European Patent Office / Office européen des brevets

(11) **EP 4 080 345 A1**

(12) **EUROPEAN PATENT APPLICATION**
published in accordance with Art. 153(4) EPC

(43) Date of publication:
**26.10.2022 Bulletin 2022/43**

(21) Application number: **20920102.9**

(22) Date of filing: **30.10.2020**

(51) International Patent Classification (IPC):
**G06F 3/14** *(2006.01)*    **G06F 9/451** *(2018.01)*
**G06K 9/62** *(2022.01)*

(86) International application number:
**PCT/CN2020/125607**

(87) International publication number:
**WO 2021/164313 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.02.2020 CN 202010106801**

(71) Applicant: **Huawei Technologies Co., Ltd.
Shenzhen, Guangdong 518129 (CN)**

(72) Inventors:
• **MA, Xiaohui**
  **Shenzhen, Guangdong 518129 (CN)**
• **ZHOU, Xingchen**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **INTERFACE LAYOUT METHOD, APPARATUS AND SYSTEM**

(57)    This application is applicable to the field of artificial intelligence recognition technologies, and provides an interface layout method, apparatus, and system. The method includes: A first terminal device receives a screen projection instruction, where the screen projection instruction is used to instruct the first terminal device to perform screen projection to a second terminal device. The first terminal device generates, based on interface information of a first interface and second device information, a second interface to be displayed on the second terminal device, where the first interface is an interface displayed on the first terminal device, and the second device information is used to indicate a screen size and a screen status of the second terminal device. In this way, the second terminal device can display the second interface that matches the second terminal device, and a user can conveniently control the second interface via the second terminal device. This avoids a problem that the user cannot conveniently control a screen projection interface, improves convenience of controlling, by the user, the second interface via the second terminal device, and improves consistency between control operations performed by the user on different terminal devices.

FIG. 4

- Receive a screen projection instruction — 401
- Obtain interface information of a first interface and second device information — 402
- Perform recognition based on element information of at least one interface element by using a pre-trained interface recognition model, to determine an interface category — 403
- Arrange the at least one interface element based on the interface category and the second device information, to obtain a second interface — 404
- Send the second interface to a second terminal device, so that the second terminal device displays the second interface — 405
- Update the interface recognition model based on obtained feedback information — 406

EP 4 080 345 A1

**Description**

This application claims priority to Chinese Patent Application No. 2020101068011, filed with the China National Intellectual Property Administration on February 10, 2020 and entitled "INTERFACE LAYOUT METHOD, APPARATUS, AND SYSTEM", which is incorporated herein by reference in its entirety.

**TECHNICAL FIELD**

This application belongs to the field of artificial intelligence recognition technologies, and in particular, to an interface layout method, apparatus, and system.

**BACKGROUND**

Based on continuous development of terminal devices, when a terminal device loads an application, the terminal device not only can display an interface of the application, but also can project the interface of the application to another terminal device, so that a user can control, via the another terminal device, the application to perform different functions, and the user can experience a seamless service allowing consistent operations on different terminal devices.

In the related technology, when a first terminal device loads an application, if the first terminal device detects a screen projection operation triggered by a user, the first terminal device may project, based on the screen projection operation, a currently displayed interface of the application to a second terminal device indicated by the screen projection operation, and the second terminal device may display the interface of the application displayed on the first terminal device.

However, different terminal devices have different screen sizes, and convenience degrees for the user to control the terminal devices are different. Consequently, after the interface displayed on the first terminal device is projected to the second terminal device, the user cannot conveniently control the projected interface via the second terminal device.

**SUMMARY**

Embodiments of this application provide an interface layout method, apparatus, and system, to resolve a problem that after a first terminal device projects a displayed interface to a second terminal device, a user cannot conveniently control the projected interface via the second terminal device.

According to a first aspect, an embodiment of this application provides an interface layout method, where the method is applied to a first terminal device, the first terminal device is connected to a second terminal device, and the method includes:

    receiving a screen projection instruction, where the screen projection instruction is used to instruct the first terminal device to perform screen projection to the second terminal device; and
    generating, based on interface information of a first interface and second device information, a second interface to be displayed on the second terminal device, where the first interface is an interface displayed on the first terminal device, and the second device information is used to indicate a screen size and a screen status of the second terminal device.

In a first possible implementation of the first aspect, the generating, based on interface information of a first interface and second device information, a second interface to be displayed on the second terminal device includes:

    obtaining the interface information of the first interface and the second device information, where the interface information of the first interface includes element information of at least one interface element in the first interface, and the element information is used to indicate a name and a type of the interface element, and a location of the interface element in the first interface;
    performing recognition based on the element information of the at least one interface element by using a pre-trained interface recognition model, to determine an interface category; and
    arranging the at least one interface element based on the interface category and the second device information, to obtain the second interface.

With reference to the first possible implementation of the first aspect, in a second possible implementation of the first aspect, the interface information of the first interface further includes an interface attribute, and the interface attribute is used to indicate an interface size and an interface direction of the first interface; and

    the performing recognition based on the element information of the at least one interface element by using a pre-trained interface recognition model, to determine an interface category includes:

performing feature extraction on at least one piece of the element information based on the interface attribute, to obtain interface feature data; and

inputting the interface feature data into the interface recognition model, and recognizing the interface feature data by using the interface recognition model, to obtain the interface category output from the interface recognition model.

With reference to the first possible implementation of the first aspect, in a third possible implementation of the first aspect, the arranging the at least one interface element based on the interface category and the second device information, to obtain the second interface includes:

dividing, based on the interface category, a display area of the second terminal device, to obtain a plurality of sub-areas, where the display area is indicated by the second device information;
determining an interface element arranged in each sub-area; and
adjusting each interface element in each sub-area based on a size of the display area indicated by the second device information and a quantity of interface elements arranged in each sub-area, to obtain the second interface.

With reference to the third possible implementation of the first aspect, in a fourth possible implementation of the first aspect, the adjusting each interface element in each sub-area based on a size of the display area indicated by the second device information and a quantity of interface elements arranged in each sub-area, to obtain the second interface includes:

determining the quantity of interface elements in each sub-area;
adjusting a size and a direction of each interface element in each sub-area based on the size of the display area, a preset arrangement rule, and the quantity of elements corresponding to the sub-area, to obtain an adjusted interface element; and
adjusting, in each sub-area, a location of an adjusted interface element in the sub-area based on the quantity of elements corresponding to the sub-area, to obtain the second interface.

With reference to any one of the first to the fourth possible implementations of the first aspect, in a fifth possible implementation of the first aspect, after the generating, based on interface information of a first interface and second device information, a second interface to be displayed on the second terminal device, the method further includes:
sending the second interface to the second terminal device, so that the second terminal device displays the second interface.

With reference to the fifth possible implementation of the first aspect, in a sixth possible implementation of the first aspect, after the sending the second interface to the second terminal device, the method further includes:

obtaining feedback information, where the feedback information is information fed back by a user on the second interface displayed on the second terminal device; and
if the feedback information meets a preset update condition, updating the interface recognition model based on the feedback information.

With reference to any one of the first to the fourth possible implementations of the first aspect, in a seventh possible implementation of the first aspect, before the generating, based on interface information of a first interface and second device information, a second interface to be displayed on the second terminal device, the method further includes:

performing interface element extraction in the first interface based on an extraction operation triggered by a user, to obtain a plurality of interface elements; and
generating element information of the plurality of interface elements based on a supplementing operation triggered by the user.

With reference to any one of the first to the fourth possible implementations of the first aspect, in an eighth possible implementation of the first aspect, after the generating, based on interface information of a first interface and second device information, a second interface to be displayed on the second terminal device, the method further includes:

recording an adjustment operation triggered by a user on at least one interface element in the second interface; and
adjusting the arrangement rule based on the adjustment operation.

According to a second aspect, an embodiment of this application provides an interface layout apparatus, where the apparatus is applied to a first terminal device, the first terminal device is connected to a second terminal device, and the apparatus includes:

a receiving module, configured to receive a screen projection instruction, where the screen projection instruction is used to instruct the first terminal device to perform screen projection to the second terminal device; and
a generation module, configured to generate, based on interface information of a first interface and second device information, a second interface to be displayed on the second terminal device, where the first interface is an interface displayed on the first terminal device, and the second device information is used to indicate a screen size and a screen status of the second terminal device.

In a first possible implementation of the second aspect, the generation module is specifically configured to: obtain the interface information of the first interface and the second device information, where the interface information of the first interface includes element information of at least one interface element in the first interface, and the element information is used to indicate a name and a type of the interface element, and a location of the interface element in the first interface; perform recognition based on the element information of the at least one interface element by using a pre-trained interface recognition model, to determine an interface category; and arrange the at least one interface element based on the interface category and the second device information, to obtain the second interface.

With reference to the first possible implementation of the second aspect, in a second possible implementation of the second aspect, the interface information of the first interface further includes an interface attribute, and the interface attribute is used to indicate an interface size and an interface direction of the first interface; and
the generation module is further specifically configured to: perform feature extraction on at least one piece of the element information based on the interface attribute, to obtain interface feature data; and input the interface feature data into the interface recognition model, and recognize the interface feature data by using the interface recognition model, to obtain the interface category output from the interface recognition model.

With reference to the first possible implementation of the second aspect, in a third possible implementation of the second aspect, the generation module is further specifically configured to: divide, based on the interface category, a display area of the second terminal device, to obtain a plurality of sub-areas, where the display area is indicated by the second device information; determine an interface element arranged in each sub-area; and adjust each interface element in each sub-area based on a size of the display area indicated by the second device information and a quantity of interface elements arranged in each sub-area, to obtain the second interface.

With reference to the third possible implementation of the second aspect, in a fourth possible implementation of the second aspect, the generation module is further specifically configured to: determine the quantity of interface elements in each sub-area; adjust a size and a direction of each interface element in each sub-area based on the size of the display area, a preset arrangement rule, and the quantity of elements corresponding to the sub-area, to obtain an adjusted interface element; and adjust, in each sub-area, a location of an adjusted interface element in the sub-area based on the quantity of elements corresponding to the sub-area, to obtain the second interface.

With reference to any one of the first to the fourth possible implementations of the second aspect, in a fifth possible implementation of the second aspect, the apparatus further includes:
a sending module, configured to send the second interface to the second terminal device, so that the second terminal device displays the second interface.

With reference to the fifth possible implementation of the second aspect, the apparatus further includes:

an obtaining module, configured to obtain feedback information, where the feedback information is information fed back by a user on the second interface displayed on the second terminal device; and
an updating module, configured to: if the feedback information meets a preset update condition, update the interface recognition model based on the feedback information.

With reference to any one of the first to the fourth possible implementations of the second aspect, the apparatus further includes:

an extraction module, configured to perform interface element extraction in the first interface based on an extraction operation triggered by a user, to obtain a plurality of interface elements; and
a supplementing module, configured to generate element information of the plurality of interface elements based on a supplementing operation triggered by the user.

With reference to any one of the first to the fourth possible implementations of the second aspect, in an eighth possible implementation of the second aspect, the apparatus further includes:

a recording module, configured to record an adjustment operation triggered by a user on at least one interface element in the second interface; and

an adjustment module, configured to adjust the arrangement rule based on the adjustment operation.

According to a third aspect, an embodiment of this application provides an interface layout system, including a first terminal device and a second terminal device, where the first terminal device is connected to the second terminal device;

the first terminal device receives a screen projection instruction, where the screen projection instruction is used to instruct the first terminal device to perform screen projection to the second terminal device;

the first terminal device generates, based on interface information of a first interface and second device information, a second interface to be displayed on the second terminal device, where the first interface is an interface displayed on the first terminal device, and the second device information is used to indicate a screen size and a screen status of the second terminal device;

the first terminal device sends the second interface to the second terminal device; and

the second terminal device receives and displays the second interface.

According to a fourth aspect, an embodiment of this application provides a terminal device. The terminal device includes a memory, a processor, and a computer program that is stored in the memory and that can be run on the processor. When executing the computer program, the processor implements the interface layout method according to any one of the first aspect or the possible implementations of the first aspect.

According to a fifth aspect, an embodiment of this application provides a computer-readable storage medium. The computer-readable storage medium stores a computer program. When the computer program is executed by a processor, the interface layout method according to any one of the first aspect or the possible implementations of the first aspect is implemented.

According to a sixth aspect, an embodiment of this application provides a computer program product. When the computer program product runs on a terminal device, the terminal device is enabled to perform the interface layout method according to any one of the first aspect or the possible implementations of the first aspect.

Compared with the conventional technology, the embodiments of this application have the following beneficial effects:

In the embodiments of this application, the first terminal device receives the projection instruction that instructs the first terminal device to perform screen projection to the second terminal device, and generates, based on the second device information and the interface information of the first interface displayed on the first terminal device, the second interface to be displayed on the second terminal device, where the second device information is used to indicate the screen size and the screen status of the second terminal device. In this way, the second terminal device can display the second interface that matches the second terminal device, and a user can conveniently control the second interface via the second terminal device. This avoids a problem that the user cannot conveniently control a screen projection interface, improves convenience of controlling, by the user, the second interface via the second terminal device, and improves consistency between control operations performed by the user on different terminal devices.

**BRIEF DESCRIPTION OF DRAWINGS**

FIG. 1 is a diagram of a system architecture of an interface layout system related to an interface layout method according to an embodiment of this application;

FIG. 2 is a schematic diagram of a structure of a mobile phone according to an embodiment of this application;

FIG. 3 is a schematic diagram of a layered architecture of a software system according to an embodiment of this application;

FIG. 4 is a schematic flowchart of an interface layout method according to an embodiment of this application;

FIG. 5 is a schematic diagram of a first interface of a player according to an embodiment of this application;

FIG. 6 is a schematic diagram of an interface falling into an interface category 1 according to an embodiment of this application;

FIG. 7 is a schematic diagram of an interface falling into an interface category 2 according to an embodiment of this application;

FIG. 8-a is a schematic diagram of an interface falling into an interface category 3 according to an embodiment of this application;

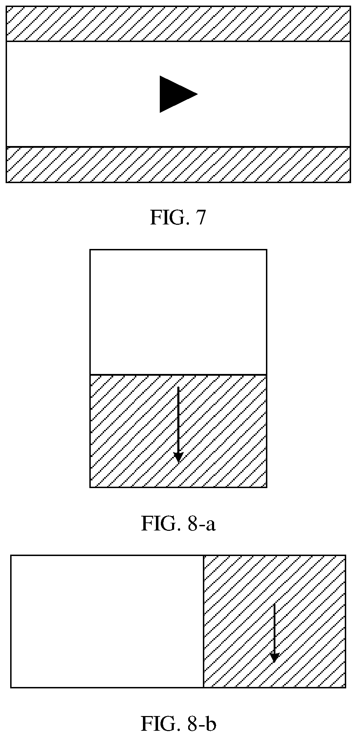

FIG. 8-b is a schematic diagram of an interface falling into another interface category 3 according to an embodiment of this application;

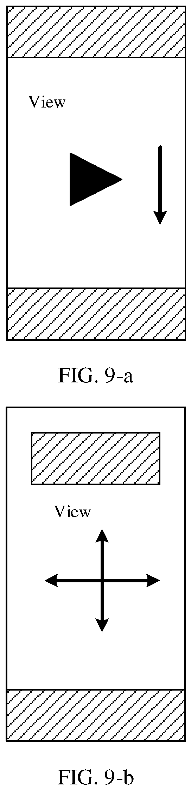

FIG. 9-a is a schematic diagram of an interface falling into an interface category 4 according to an embodiment of this application;

FIG. 9-b is a schematic diagram of an interface falling into another interface category 4 according to an embodiment of this application;

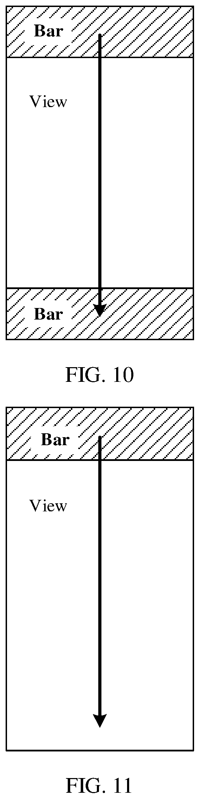

FIG. 10 is a schematic diagram of an interface falling into an interface category 5 according to an embodiment of this application;

FIG. 11 is a schematic diagram of an interface falling into an interface category 6 according to an embodiment of this application;

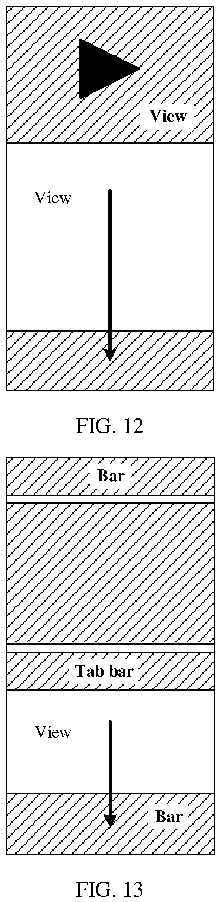

FIG. 12 is a schematic diagram of an interface falling into an interface category 7 according to an embodiment of this application;

FIG. 13 is a schematic diagram of an interface falling into an interface category 8 according to an embodiment of this application;

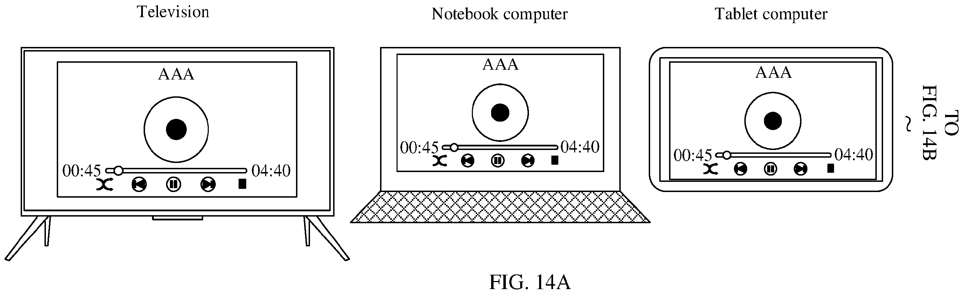

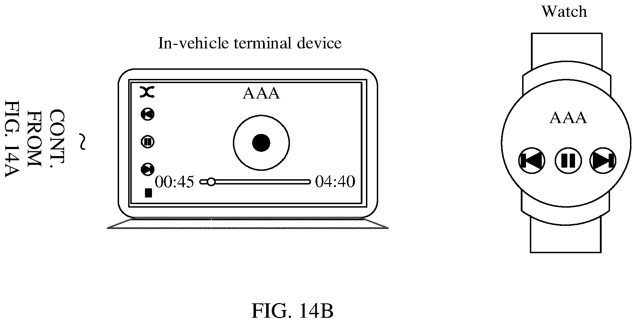

FIG. 14A and FIG. 14B are a schematic diagram of interfaces on different terminal devices according to an embodiment of this application;

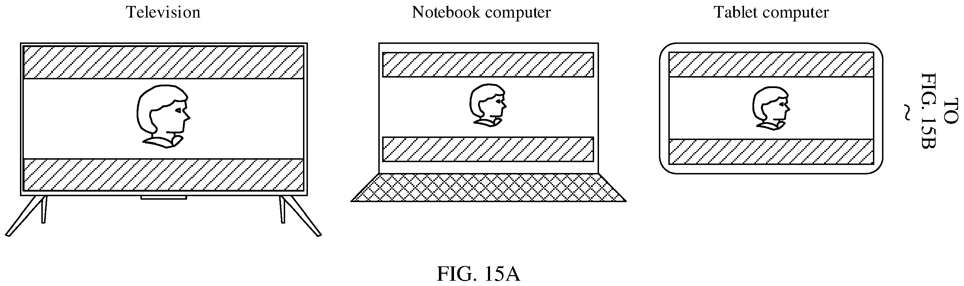

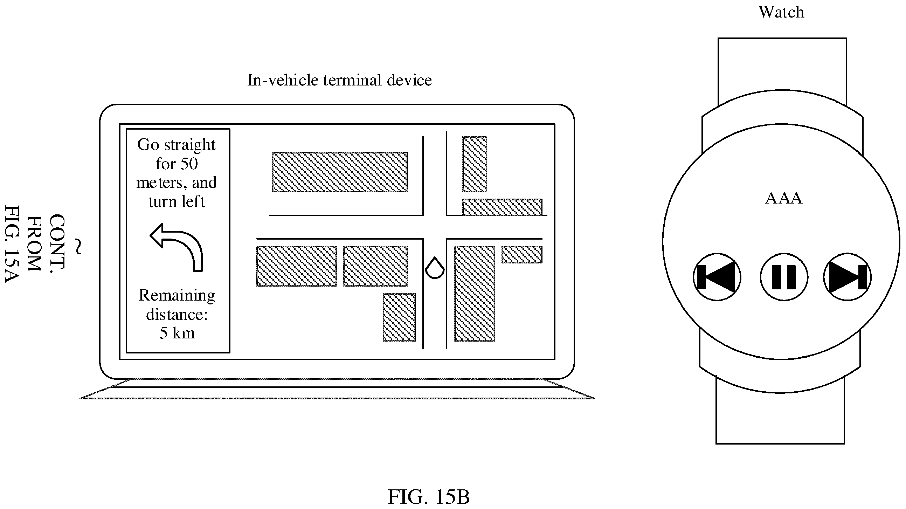

FIG. 15A and FIG. 15B are another schematic diagram of interfaces on different terminal devices according to an embodiment of this application;

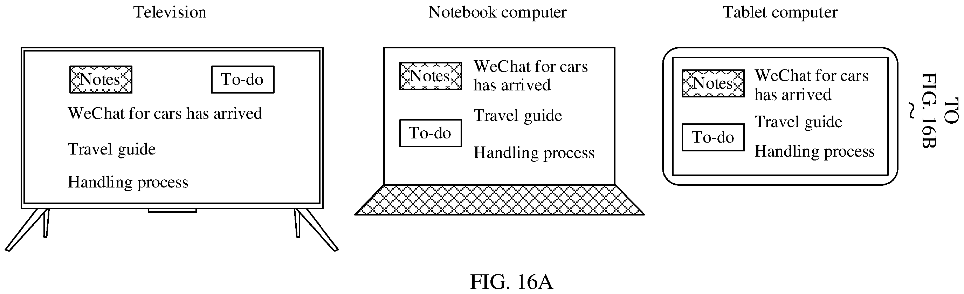

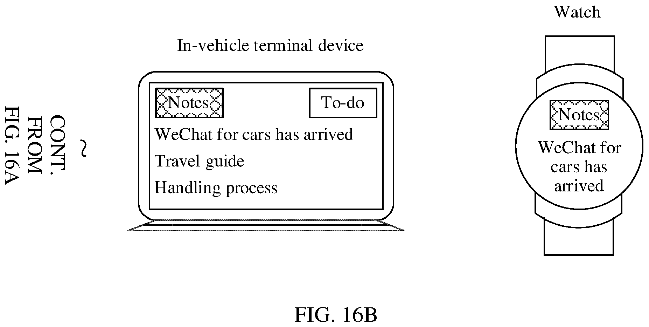

FIG. 16A and FIG. 16B are still another schematic diagram of interfaces on different terminal devices according to an embodiment of this application;

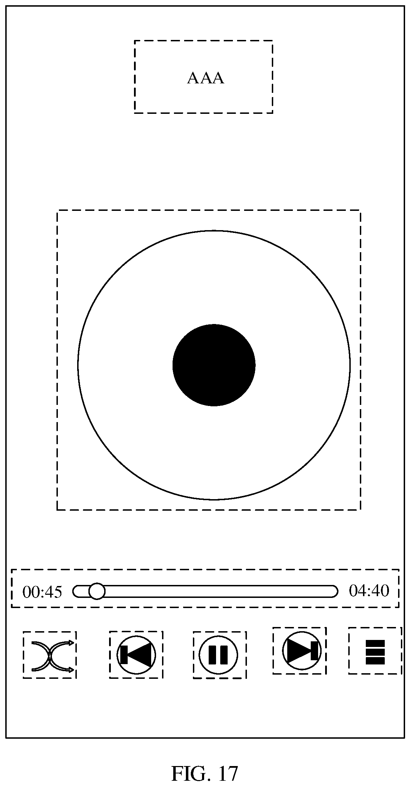

FIG. 17 is a schematic diagram of a first interface according to an embodiment of this application;

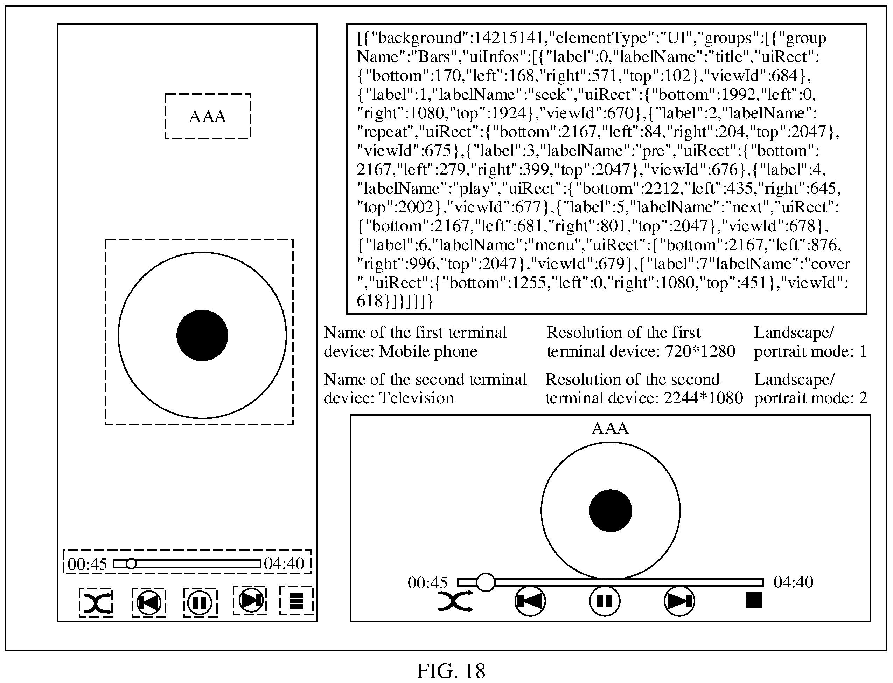

FIG. 18 is a schematic diagram of an IDE interface according to an embodiment of this application;

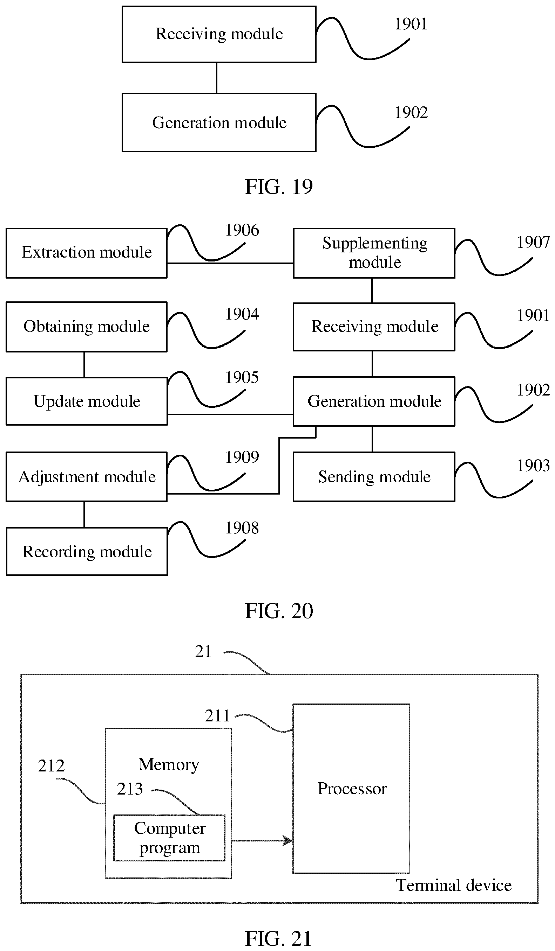

FIG. 19 is a structural block diagram of an interface layout apparatus according to an embodiment of this application;

FIG. 20 is a structural block diagram of another interface layout apparatus according to an embodiment of this application; and

FIG. 21 is a schematic diagram of a structure of a terminal device according to an embodiment of this application.

## DESCRIPTION OF EMBODIMENTS

In the following descriptions, for the purpose of illustration rather than limitation, specific details such as a particular system structure and a technology are provided to make a thorough understanding of the embodiments of this application. However, persons skilled in the art should know that this application may also be implemented in other embodiments without these specific details. In other cases, detailed descriptions of a well-known system, apparatus, circuit, and method are omitted, so that this application is described without being obscured by unnecessary details.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly. It should be further understood that, in the embodiments of this application, "one or more" means one, two, or more. In addition, "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

An interface layout method provided in the embodiments of this application may be applied to a terminal device such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in the embodiments of this application.

For example, the terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device that has a wireless communication function, a vehicle-mounted device, an internet of vehicle terminal, a computer, a laptop computer, a handheld communications device, a handheld computing device, or a satellite radio device.

By way of example and not limitation, when the terminal device is a wearable device, the wearable device may alternatively be a generic term for wearable devices such as glasses, gloves, watches, clothes, and shoes that are developed based on intelligent design of daily wearing by using wearable technologies. The wearable device is a portable device that can be directly worn by a user or integrated into clothes or an accessory of a user. The wearable device is not only a hardware device, but also implements powerful functions through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

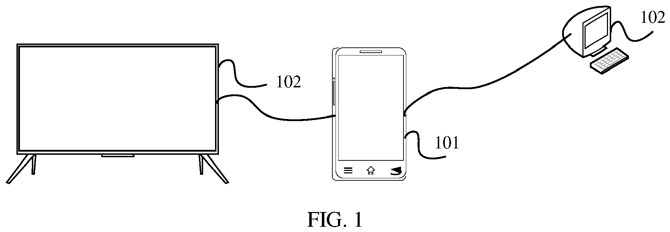

FIG. 1 is a diagram of a system architecture of an interface layout system related to an interface layout method according to an embodiment of this application. As shown in FIG. 1, the interface layout system may include a first terminal device 101 and at least one second terminal device 102, and the first terminal device may be connected to each second terminal device.

The first terminal device may be a terminal device that is convenient for a user to perform an input operation, and the second terminal device may be a terminal device that is commonly used by the user but is inconvenient for performing an input operation. For example, the first terminal device may be a mobile phone or a tablet computer, the second terminal device may be a television, a sound box, a headset, a vehicle-mounted device, or the like, and the input operation performed by the user may include inputting text information and a tap operation triggered on each interface element in an interface. The tap operation may be a tap operation, a double-tap operation, or an operation in another form.

The first terminal device may load different applications, and may display, on a screen of the first terminal device, first interfaces corresponding to the applications. If the first terminal device detects a screen projection instruction triggered by the user, it indicates that the user expects to project the first interface to the second terminal device and expects to display, via the second terminal device, an interface that the application runs. In this case, the first terminal device may obtain interface information of the first interface and second device information of the second terminal device, and generate a re-arranged second interface based on the interface information and the second device information. Then, the first terminal device may send the re-arranged second interface to the second terminal device, and the second terminal device may display the re-arranged second interface.

The interface information of the first interface may include element information of an interface element that is in the first interface and that can be displayed on the second terminal device. For example, the element information may include a location of the interface element in the first interface, an element type to which the interface element belongs, a name of the interface element, and the like. In addition, the second device information may include information such as a screen size, a screen direction, and screen resolution of the second terminal device. For example, the second device information may indicate that the resolution of the second terminal device is 2244*1080 and the screen is in landscape mode.

In addition, in a process of generating the re-arranged second interface based on the interface information and the second device information, the first terminal device may analyze pre-processed interface information by using a pre-trained interface recognition model, to determine an interface type; and then the first terminal device may arrange each interface element in the interface information based on the interface type, the screen size and the screen direction of the second terminal device that are indicated by the second device information, and a screen of the second terminal device, to obtain the re-arranged second interface.

It should be noted that, in actual application, the first terminal device may perform interface layout for one first interface, or may simultaneously perform interface layout for a plurality of first interfaces. Correspondingly, each first interface may correspond to one interface category. If there are a plurality of first interfaces, each first interface may correspond to one interface category. In the embodiments of this application, one first interface and one interface category are merely used as an example for description, and a quantity of first interfaces and a quantity of interface categories are not limited.

In addition, the embodiments of this application mainly relate to the artificial intelligence (Artificial Intelligence, AI) recognition field, and in particular, to the field of machine learning and/or neural network technologies. For example, the interface recognition model in the embodiments of this application is obtained through training by using AI recognition and machine learning technologies.

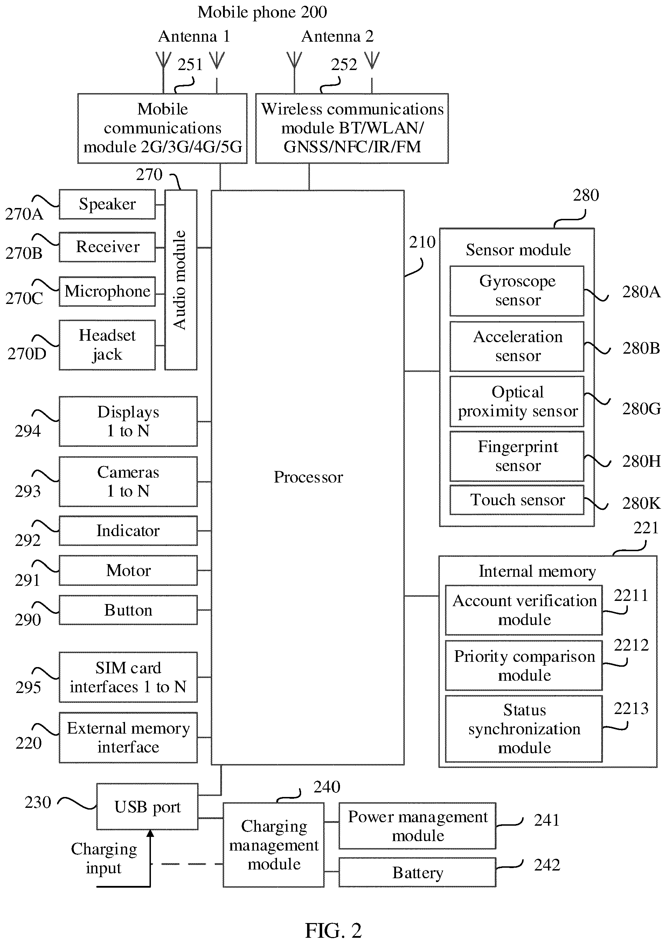

The following provides descriptions by using an example in which the first terminal device is a mobile phone. FIG. 2 is a schematic diagram of a structure of a mobile phone 200 according to an embodiment of this application.

The mobile phone 200 may include a processor 210, an external memory interface 220, an internal memory 221, a USB port 230, a charging management module 240, a power management module 241, a battery 242, an antenna 1, an antenna 2, a mobile communications module 251, a wireless communications module 252, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like. The sensor module 280 may include a gyroscope sensor 280A, an acceleration sensor 280B, an optical proximity sensor 280G, a fingerprint sensor 280H, and a touch sensor 280K (certainly, the mobile phone 200 may further include other sensors such as a temperature sensor, a pressure sensor, a distance sensor, a magnetic sensor, an ambient light sensor, a barometric pressure sensor, and a bone conduction sensor, which are not shown in the figure).

It may be understood that the structure shown in this embodiment of the present invention does not constitute a specific limitation on the mobile phone 200. In some other embodiments of this application, the mobile phone 200 may include more or fewer components than those shown in the figure, some components may be combined, or some components may be split, or different component arrangements may be used. The components shown in the figure may be implemented by using hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into one or more processors. The controller may be a nerve center and a command center of the mobile phone 200. The controller may generate an operation control signal based on an instruction operation code and a time sequence signal, to control instruction reading and instruction execution.

A memory may be further disposed in the processor 210, and is configured to store instructions and data. In some embodiments, the memory in the processor 210 is a cache memory. The memory may store instructions or data that has just been used or is cyclically used by the processor 210. If the processor 210 needs to use the instructions or the data again, the processor 210 may directly invoke the instructions or the data from the memory. This avoids repeated access and reduces waiting time of the processor 210. Therefore, system efficiency is improved. For example, the memory may store an interface attribute of the first terminal device, for example, an interface size and an interface direction of a first interface.

The processor 210 may perform an interface layout method provided in the embodiments of this application, to improve convenience of controlling, by a user, a second interface via a second terminal device, and improve consistency between control operations performed by the user on different terminal devices. The processor 210 may include different components. For example, when a CPU and a GPU are integrated, the CPU and the GPU may cooperate to perform the interface layout method provided in the embodiments of this application. For example, in the interface layout method, some algorithms are executed by the CPU, and other algorithms are executed by the GPU, to obtain higher processing efficiency. For example, the CPU may obtain, according to a received screen projection instruction, interface information of a currently displayed first interface and device information of a screen projection terminal device, and the GPU may generate, based on the interface information and the device information, a second interface appropriate for the screen projection terminal device.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, quantum dot light-emitting diodes (quantum dot light-emitting diodes, QLED), or the like. In some embodiments, the mobile phone 200 may include one or N displays 294, where N is a positive integer greater than 1. The display 294 may be configured to display information input by a user or information provided to a user, and various graphical user interfaces (graphical user interface, GUI). For example, the display 294 may display a photo, a video, a web page, a file, or the like. For another example, the display 294 may display a graphical user interface. The graphical user interface may include a status bar, a navigation bar that can be hidden, a time and weather widget (widget), and an application icon, for example, a browser icon. The status bar includes an operator name (for example, China Mobile), a mobile network (for example, 4G), time, and a battery level. The navigation bar includes an icon of a back (back) button, an icon of a home (home) button, and an icon of a forward button. In addition, it may be understood that, in some embodiments, the status bar may further include a Bluetooth icon, a Wi-Fi icon, an icon of an externally-connected device, and the like. It may be further understood that, in some other embodiments, the graphical user interface may further include a dock bar, and the dock bar may include an icon of a frequently-used application and the like. After the processor 210 detects a touch event of a user on an application icon by using a finger (a stylus or the like), in response to the touch event, the processor 210 starts a user interface of an application corresponding to the application icon, and displays the user interface of the application on the display 294.

In this embodiment of this application, the display 294 may be one integrated flexible display, or may be a spliced display including two rigid screens and one flexible screen located between the two rigid screens. After the processor 210 performs the interface layout method provided in the embodiments of this application, the processor 210 may control the GPU to generate the second interface to be displayed on the second terminal device.

The camera 293 (a front-facing camera, a rear-facing camera, or a camera that may serve as both a front-facing camera and a rear-facing camera) is configured to capture a static image or a video. Usually, the camera 293 may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 221 may be configured to store computer-executable program code. The executable program code includes instructions. The processor 210 runs the instructions stored in the internal memory 221, to implement various function applications and data processing of the mobile phone 200. The internal memory 221 may include a program storage area and a data storage area. The program storage area may store code of an operating system, an application (for example, a camera application or a WeChat application), and the like. The data storage area may store data (for example, an image or a video collected by the camera application) and the like that are created during use of the mobile phone 200.

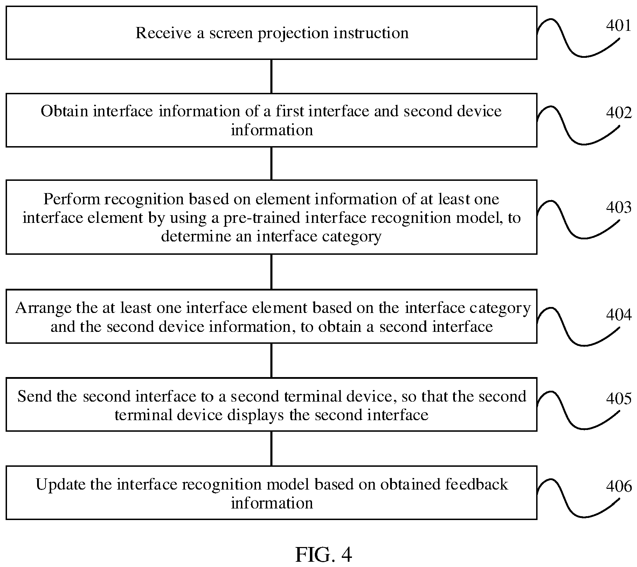

The internal memory 221 may further store one or more computer programs corresponding to the interface layout method provided in the embodiments of this application. The one or more computer programs are stored in the memory 221 and are configured for execution by the one or more processors 210. The one or more computer programs include instructions, and the instructions may be used to perform steps in corresponding embodiments in FIG. 4 to FIG. 18. The computer programs may include a receiving module and a generation module. The receiving module is configured to receive a screen projection instruction, where the screen projection instruction is used to instruct the first terminal device to perform screen projection to the second terminal device. The generation module is configured to generate, based on interface information of a first interface and second device information, a second interface to be displayed on the second terminal device, where the first interface is an interface displayed on the first terminal device, and the second device information is used to indicate a screen size and a screen status of the second terminal device.

In addition, the internal memory 221 may include a high-speed random access memory, or may include a nonvolatile memory such as at least one magnetic disk storage device, a flash memory, or a universal flash storage (universal flash storage, UFS).

Certainly, the code corresponding to the interface layout method provided in the embodiments of this application may alternatively be stored in an external memory. In this case, the processor 210 may run, through the external memory interface 220, the code that corresponds to the interface layout method and that is stored in the external memory, and the processor 210 may control the GPU to generate the second interface to be displayed on the second terminal device.

The following describes functions of the sensor module 280.

The gyroscope sensor 280A may be configured to determine a motion posture of the mobile phone 200. In some embodiments, angular velocities of the mobile phone 200 around three axes (namely, axes x, y, and z) may be determined by using the gyroscope sensor 280A. In other words, the gyroscope sensor 280A may be configured to detect a current motion status of the mobile phone 200, for example, a shaking state or a static state.

When the display in this embodiment of this application is a foldable screen, the gyroscope sensor 280A may be configured to detect a folding or unfolding operation performed on the display 294. The gyroscope sensor 280A may report the detected folding or unfolding operation as an event to the processor 210, to determine whether the display 294 is in a folded state or an unfolded state.

The acceleration sensor 280B may detect magnitudes of accelerations in various directions (usually on three axes) of the mobile phone 200. In other words, the gyroscope sensor 280A may be configured to detect a current motion status of the mobile phone 200, for example, a shaking state or a static state. When the display in this embodiment of this application is a foldable screen, the acceleration sensor 280B may be configured to detect a folding or unfolding operation performed on the display 294. The acceleration sensor 280B may report the detected folding or unfolding operation as an event to the processor 210, to determine whether the display 294 is in a folded state or an unfolded state.

The optical proximity sensor 280G may include, for example, a light-emitting diode (LED) and an optical detector, for example, a photodiode. The light-emitting diode may be an infrared light-emitting diode. The mobile phone emits infrared light by using the light-emitting diode. The mobile phone detects infrared reflected light from a nearby object by using the photodiode. When sufficient reflected light is detected, the mobile phone may determine that there is an object near the mobile phone. When insufficient reflected light is detected, the mobile phone may determine that there is no object near the mobile phone. When the display in this embodiment of this application is a foldable screen, the optical proximity sensor 280G may be disposed on a first screen of the foldable display 294, and the optical proximity sensor 280G may detect a magnitude of an angle between the first screen and a second screen in a folded or unfolded state based on an optical path difference between infrared signals.

The gyroscope sensor 280A (or the acceleration sensor 280B) may send detected motion status information (for example, the angular velocity) to the processor 210. The processor 210 determines, based on the motion status information, whether the mobile phone is currently in a handheld state or a tripod state (for example, when the angular velocity is not 0, it indicates that the mobile phone 200 is in the handheld state).

The fingerprint sensor 280H is configured to collect a fingerprint. The mobile phone 200 may use a feature of the collected fingerprint to implement fingerprint-based unlocking, application lock access, fingerprint-based photographing, fingerprint-based call answering, and the like.

The touch sensor 280K is also referred to as a "touch panel". The touch sensor 280K may be disposed on the display 294. The touch sensor 280K and the display 294 constitute a touchscreen, which is also referred to as a "touch screen". The touch sensor 280K is configured to detect a touch operation performed on or near the touch sensor 280K. The touch sensor may transfer the detected touch operation to the application processor, to determine a type of a touch event. The display 294 may provide a visual output related to the touch operation. In some other embodiments, the touch sensor 280K may alternatively be disposed on a surface of the mobile phone 200 at a location different from a location of the display 294.

For example, the display 294 of the mobile phone 200 displays a home screen, and the home screen includes icons of a plurality of applications (for example, a camera application and a WeChat application). The user taps an icon of the camera application on the home screen via the touch sensor 280K, to trigger the processor 210 to start the camera application and turn on the camera 293. The display 294 displays an interface of the camera application, for example, a viewfinder interface.

A wireless communication function of the mobile phone 200 may be implemented through the antenna 1, the antenna 2, the mobile communications module 251, the wireless communications module 252, the modem processor, the baseband processor, and the like.

The antenna 1 and the antenna 2 each are configured to transmit and receive electromagnetic wave signals. Each antenna in the mobile phone 200 may be configured to cover one or more communication bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communications module 251 may provide a wireless communication solution that includes 2G, 3G, 4G, 5G, or the like and that is applied to the mobile phone 200. The mobile communications module 251 may include at least one filter, a switch, a power amplifier, a low noise amplifier (low noise amplifier, LNA), and the like. The mobile communications module 251 may receive an electromagnetic wave through the antenna 1, perform processing such as filtering and amplification on the received electromagnetic wave, and transmit a processed electromagnetic wave to the modem processor for demodulation. The mobile communications module 251 may further amplify a signal modulated by the modem processor, and convert the signal into an electromagnetic wave for radiation through the antenna 1. In some embodiments, at least some functional modules of the mobile communications module 251 may be disposed in the processor 210. In some embodiments, at least some functional modules of the mobile communications module 251 may be disposed in a same device as at least some modules of the processor 210. In this embodiment of this application, the mobile communications module 251 may be further configured to exchange information with another terminal device, for example, send an audio output request to the another terminal device, or the mobile communications module 251 may be configured to receive an audio output request, and encapsulate the received audio output request into a message in a specified format.

The modem processor may include a modulator and a demodulator. The modulator is configured to modulate a to-be-sent low-frequency baseband signal into a medium-frequency or high-frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (not limited to the speaker 270A, the receiver 270B, or the like), or displays an image or a video by using the display 294. In some embodiments, the modem processor may be an independent component. In some other embodiments, the modem processor may be independent of the processor 210, and is disposed in a same device as the mobile communications module 251 or another functional module.

The wireless communications module 252 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the mobile phone 200. The wireless communications module 252 may be one or more components that integrate at least one communications processing module. The wireless communications module 252 receives an electromagnetic wave through the antenna 2, performs frequency modulation and filtering processing on the electromagnetic wave signal, and sends a processed signal to the processor 210. The wireless communications module 252 may further receive a to-be-sent signal from the processor 210, perform frequency modulation and amplification on the signal, and convert the signal into an electromagnetic wave for radiation through the antenna 2. In this embodiment of this application, the wireless communications module 252 is configured to establish a connection to an audio output device, and output a speech signal via the audio output device. Alternatively, the wireless communications module 252 may be configured to access an access point device, and send a message corresponding to an audio output request to another terminal device, or receive a message corresponding to an audio output request sent by another terminal device. Optionally, the wireless communications module 252 may be further configured to receive voice data from another terminal device.

In addition, the mobile phone 200 may implement audio functions such as music playing and recording by using the audio module 270, the speaker 270A, the receiver 270B, the microphone 270C, the headset jack 270D, the application processor, and the like. The mobile phone 200 may receive an input from the button 290, and generate a button signal input related to a user setting and function control of the mobile phone 200. The mobile phone 200 may generate a vibration prompt (for example, an incoming call vibration prompt) via the motor 291. The indicator 292 of the mobile phone 200 may be an indicator light, may be configured to indicate a charging status and a power change, or may be configured to indicate a message, a missed call, a notification, and the like. The SIM card interface 295 of the mobile phone 200 is configured to connect to a SIM card. The SIM card may be inserted into the SIM card interface 295 or removed from the SIM card interface 295, to implement contact with or separation from the mobile phone 200.

It should be understood that, in actual application, the mobile phone 200 may include more or fewer components than those shown in FIG. 2. This is not limited in this embodiment of this application. The mobile phone 200 shown in the figure is merely an example, and the mobile phone 200 may have more or fewer components than those shown in the figure, two or more components may be combined, or different component configurations may be used. Various components shown in the figure may be implemented in hardware, software, or a combination of hardware and software that includes one or more signal processing and/or application-specific integrated circuits.

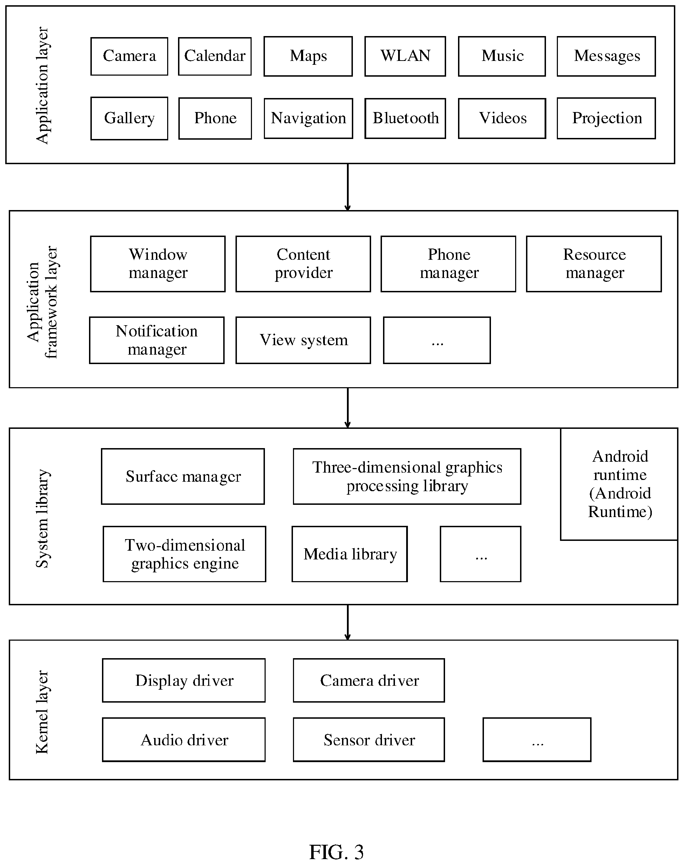

A software system of a terminal device may use a layered architecture, an event-driven architecture, a microkernel architecture, a micro service architecture, or a cloud architecture. In the embodiments of the present invention, an Android system with a layered architecture is used as an example to describe a software structure of the terminal device. FIG. 3 is a block diagram of a software structure of a terminal device according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application packages may include applications such as Phone, Camera, Gallery, Calendar, Phone, Maps, Navigation, WLAN, Bluetooth, Music, Videos, Messages, and Projection.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. For example, the window manager may obtain an interface attribute of a first interface, for example, an interface size and an interface direction of the first interface.

The content provider is configured to store and obtain data, and enable the data to be accessed by an application. The data may include a video, an image, audio, calls that are made and received, a browsing history and a bookmark, a phone book, and the like.

The view system includes visual controls such as a control for displaying text and a control for displaying an image. The view system may be configured to construct an application. A display interface may include one or more views. For example, a display interface including a Messages notification icon may include a text displaying view and an image displaying view.

The phone manager is configured to provide a communication function of the terminal device, for example, management of a call status (including answering, declining, or the like).

The resource manager provides various resources for an application, such as a localized character string, an icon, an image, a layout file, and a video file.

The notification manager enables an application to display notification information in the status bar, and may be configured to convey a notification message. The notification message may automatically disappear after a short pause without user interaction. For example, the notification manager is configured to notify download completion, give a message notification, and the like. The notification manager may alternatively be a notification that appears in the status bar at the top of the system in a form of a graph or a scroll bar text, for example, a notification of an application running on the background or a notification that appears on the screen in a form of a dialog window. For example, text information is prompted in the status bar, a prompt tone is produced, the terminal device vibrates, or an indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer are run on the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, image synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

FIG. 4 is a schematic flowchart of an interface layout method according to an embodiment of this application. By way of example and not limitation, the method may be applied to the foregoing first terminal device. As shown in FIG. 4, the method includes the following steps.

Step 401: Receive a screen projection instruction.

The screen projection instruction is used to instruct the first terminal device to perform screen projection to a second terminal device. For example, the screen projection instruction may include a second device identifier used to indicate the second terminal device. In this case, the first terminal device may determine, based on the second device identifier, to perform screen projection to the second terminal device.

In a process of loading an application, the first terminal device may display an interface of the application. When a network in which the first terminal device is located also includes another terminal device, for example, the second terminal device, the first terminal device may detect the screen projection instruction triggered by a user. If the first terminal device detects the screen projection instruction that is triggered for performing screen projection to the second terminal device, the first terminal device may receive the screen projection instruction, so that the first terminal device can generate, in a subsequent step, a second interface that matches the second terminal device.

For example, the first terminal device may be a mobile phone, and the second terminal device may be a television. The first terminal device loads a fitness application, and an interface displayed by the first terminal device may be a fitness video. However, when the user is keeping fit, it is inconvenient for the user to hold the mobile phone; and a screen of the mobile phone is relatively small. In this case, the first terminal device may detect the screen projection instruction triggered by the user, where the screen projection instruction instructs the first terminal device to project the interface of the fitness application to the television, so that the user conveniently views the fitness video via the television.

Step 402: Obtain interface information of a first interface and second device information.

After the first terminal device receives the screen projection instruction, it indicates that the user expects to project the interface displayed by the first terminal device to the second terminal device and expects to display, via the second terminal device, the interface displayed by the first terminal device, so that the user can conveniently control the projected interface via the second terminal device. The first terminal device may obtain the interface information of the first interface and the second device information, so that the first terminal device may generate, in a subsequent step based on the interface information of the first interface and the second device information, the second interface that matches the second terminal device and that is to be displayed on the second terminal device.

To be specific, for different types of second terminal devices, the user needs to control the second terminal devices by using different operations. Based on this, in a process of performing screen projection to the different second terminal devices, the first terminal device may adjust the first interface displayed by the first terminal device, to obtain second interfaces that respectively match the second terminal devices.

The first interface is an interface displayed on the first terminal device. The interface information may include an interface attribute and element information of at least one interface element in the first interface. The interface attribute is used to indicate an interface size and an interface direction of the first interface. The element information of the interface element is used to indicate a name and a type of the interface element, and a location of the interface element in the first interface. For example, the first terminal device may recognize each interface element in the first interface in a preset element recognition manner, and determine a plurality of interface elements in the first interface and element information of each interface element.

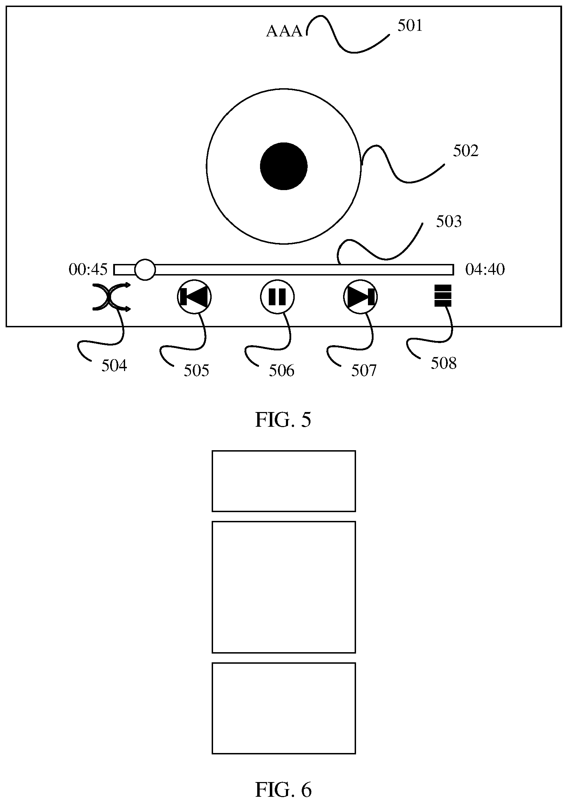

For example, FIG. 5 shows a first interface of a player displayed by a first terminal device. The first interface may include a plurality of interface elements such as a song title (title) 501, a cover (cover) 502, a seek (seek) bar 503, a repeat (repeat) play control 504, a previous (pre) control 505, a play (play) 506 control, a next (next) control 507, and a menu (menu) control 508.

Further, the first terminal device may further obtain element information of each interface element. Element information of the foregoing interface elements may include:

[{ "label":0, "labelName": "title", "uiRect": { "bottom": 170, "left": 168, "right":571, "top": 102}, "viewId":684}, {"label":1,"labelName": "seek", "uiRect": { "bottom":1992,"left":0,"right":1080,"top":1924},"viewId":670},{"label":2 ,"labelName":"repeat","uiRect":{"bottom":2167, "left":84,"right":204,"top":2047},"viewId":675},{"label":3,"labelN ame":"pre","uiRect":{"bottom":2167,"left":279,"right":399,"top":2047},"viewId":676},{"label":4,"labelName":"pla y","uiRect":{"bottom":2212,"left":435,"right":645,"top":2002},"viewId":677},{"label":5,"labelName":"next","uiRe ct":{"bottom":2167,"left":681,"right":801,"top":2047},"viewId":678},{"label":6,"labelName":"menu","uiRect":{"bottom":2167,"left":876,"right":996,"top":2047},"viewId":679},{"label":7"labelName":"cover","uiRect":{"bottom":1255,"left":0,"right":1080,"top":451},"viewId":618}].

label is used to represent an identifier of each interface element, for example, may be a sequence number of each interface element; labelname is used to represent a name of each interface element; uiRect is used to represent an area corresponding to each interface element in the first interface; and viewID is a view identifier used to represent identification information of an image corresponding to an interface element. Further, uiRect may include four parameters: bottom, top, left, and right, where bottom is used to represent a bottom boundary of an interface element, top is used to represent a top boundary of the interface element, left is used to represent a left boundary of the interface element, and right is used to represent a right boundary of the interface element. In addition, each parameter in the element information may be in unit of pixel. For example, an area corresponding to the song title has a top boundary of 102 pixels, a bottom boundary of 170 pixels, a left boundary of 168 pixels, and a right boundary of 571 pixels.

It should be noted that the parameters shown in the element information of each interface element are all examples, and the element information of the interface element is not limited herein.

It should be further noted that the interface element recognized by the first terminal device is an interface element that can be displayed on the second terminal device. In a process of recognizing the interface element, the first terminal device may first recognize all interface elements in the first interface, and then compare and match each recognized interface element with the obtained second device information according to a preset recommended algorithm. If the first terminal device determines that an interface element can be displayed on the second terminal device, the first terminal device may extract the interface element, to obtain element information of the interface element. If the first terminal device determines that an interface element cannot be displayed on the second terminal device, the first terminal device may ignore the interface element and does not extract the interface element.

In addition, in a process of obtaining the second device information, the first terminal device may first request the second device information from the second terminal device based on the second device identifier carried in the screen projection instruction; after receiving the request sent by the first terminal device, the second terminal device may obtain a screen size and a screen status of the second terminal device through extraction based on preset configuration information, and feed back the second device information including the screen size and the screen status to the first terminal device; and then, the first terminal device completes obtaining the second device information.

For example, the second device information of the second terminal device may include (dst_width: 2244, dst_height: 1080, 2), it indicates that resolution of the second terminal device is 2244*1080 and the screen status of the second terminal device is landscape mode indicated by 2.

Step 403: Perform recognition based on the element information of the at least one interface element by using a pre-trained interface recognition model, to determine an interface category.

After obtaining the interface information, the first terminal device may analyze the element information in the interface information by using the interface recognition model obtained through pre-training and based on the interface attribute included in the interface information, to determine the interface category corresponding to the first interface, so that the first terminal device can arrange each interface element based on the interface category in a subsequent step.

Different first terminal devices have different screen resolution. Therefore, the first terminal device may preprocess the element information, to reduce a calculation amount of the first terminal device. To be specific, the first terminal device maps each interface element to a mapping area with a relatively small size, performs feature extraction in the mapping area to obtain interface feature data, and further determines the interface category based on a location of the interface element indicated by the interface feature data.

Optionally, the first terminal device may perform feature extraction on element information of the plurality of interface elements based on the interface attribute, to obtain interface feature data, input the interface feature data into the interface recognition model, and recognize the interface feature data by using the interface recognition model, to obtain the interface category output from the interface recognition model.

In a possible implementation, the first terminal device may first obtain a location of each interface element based on a plurality of pieces of element information, and perform calculation based on the interface attribute in the interface information by using a preset mapping formula, to obtain a location of each interface element in a mapping area. Next, the first terminal device may perform feature extraction in the mapping area based on whether there is an interface element at each location in the mapping area, to obtain the interface feature data indicating the location of the interface element. Then, the first terminal device may input the interface feature data into the pre-trained interface recognition model, analyze, by using the interface recognition model, the interface feature data indicating the location of the interface element, and finally recognize the interface category of the first interface based on a location of each interface element in the first interface.

For example, the mapping formula may be

$$f(x) = \begin{cases} ftop + fleft + c, & xt \geq ftop, xb \leq fright \\ 0, others \end{cases}$$

. To be specific, when $xt \geq ftop$, $xb \leq$ $fbot$, $xl \geq fleft$ and $xr \leq fright$, $f(x) = ftop + fleft + c$. In other cases, $f(x)=0$. If $f(x) = 0$, $c=0$. In other cases, C is a non-zero constant.

$x = (xt, xb.xl, xr)$, $ftop = top * dsth/ src\_ height$, $fbot =bottom*dsth /src\_height$, $fleft = left* dstw/ src\_ width$, $fright = right* dstw/ src\_ width$, $dsth$ represents a height of the mapping area, $dstw$ represents a width of the mapping area, $src\_height$ represents a height of the first interface, and $src\_width$ represents a width of the first interface.

It should be noted that, in actual application, interfaces of all applications may be classified into a plurality of interface types, and a quantity of interface types is not limited in this embodiment of this application. For example, eight interface categories may be preset. FIG. 6 to FIG. 13 each are a schematic diagram corresponding to each interface category.

FIG. 6 is a schematic diagram of an interface category 1. A plurality of interface elements in the interface may be located at a same layer, and the interface elements are not overlaid. For example, the interface category 1 may be applied to a music playing interface. FIG. 7 is a schematic diagram of an interface category 2. A plurality of interface elements in the interface may also be located at a same layer, but the interface elements are overlaid. For example, the interface category 2 may be applied to a video playing interface. FIG. 8-a and FIG. 8-b are respectively schematic diagrams of an interface category 3 in portrait mode and landscape mode. A plurality of interface elements in the interface may be located at a same layer, and extended items in the interface may be overlaid. For example, the interface category 3 may be applied to a music playing interface with a pop-up playlist or a video playing page with pop-up episodes, where the playlist and the video episodes belong to slidable parts. FIG. 9-a and FIG. 9-b are respectively schematic diagrams of an interface category 4 in portrait mode. All interface elements in the interface are located at different layers, and an upward or downward slide operation or a slide operation in any direction may be performed in a view (View) area in the interface. For example, the interface category 4 may be applied to a page on which a plurality of videos are displayed, for example, a home page or a navigation page of a video application. FIG. 10 is a schematic diagram of an interface category 5. A plurality of interface elements in the interface may be located at different layers, information bars (Bar) are disposed at both the top and the bottom of the interface, and a view area in the interface is slidable. For example, the interface category 5 may be applied to a chat interface or an email interface of social software. FIG. 11 is a schematic diagram of an interface category 6. A plurality of interface elements in the interface may be located at different layers, a bar is disposed at the top of the interface, and a view area in the interface is slidable. For example, the interface category 6 may be applied to a home page of an email application or a search interface of a shopping application. FIG. 12 is a schematic diagram of an interface category 7. A plurality of interface elements in the interface may be located at different layers, upper and lower parts in the interface are view areas, the upper view area is fixed, and the lower view area is slidable. For example, the interface category 7 may be applied to a live streaming interface. FIG. 13 is a schematic diagram of an interface category 8. A plurality of interface elements in the interface may be located at different layers, and are sequentially a bar, a picture, a tab bar (tab bar), a view area, and a bar from top to bottom, and the view area may be slidable. For example, the interface category 8 may be applied to a product details interface of a shopping application.

Step 404: Arrange the at least one interface element based on the interface category and the second device information, to obtain the second interface.

After determining the interface category, the first terminal device may arrange the at least one interface element based on the determined interface category, the second device information of the second terminal device, and the screen size and the screen direction of the second terminal device that are indicated by the second device information, to obtain the second interface that matches the second terminal device.

Optionally, the first terminal device may divide, based on the interface category, a display area of the second terminal device, to obtain a plurality of sub-areas, where the display area is indicated by the second device information; the first terminal device may determine an interface element arranged in each sub-area; and then the first terminal device may adjust each interface element in each sub-area based on a size of the display area indicated by the second device information and a quantity of interface elements arranged in each sub-area, to obtain the second interface.

In a possible implementation, the first terminal device may determine, based on the plurality of sub-areas obtained through division, an interface element that can be arranged in each sub-area. Then, for all interface elements in all sub-areas, the first terminal device may adjust a size, a location, and a direction of each interface element in each sub-area based on the size of the display area and the quantity of interface elements that can be arranged in the sub-area, a quantity of elements corresponding to the sub-area, and importance of each interface element, to obtain the second interface.

Further, in a process of adjusting a size, a location, and a direction of an interface element, the first terminal device may first collect statistics on interface elements arranged in each sub-area, to determine the quantity of interface elements in each sub-area, and adjust a size and a direction of each interface element in the sub-area based on the size of the display area, a preset arrangement rule, and the quantity of elements corresponding to the sub-area, to obtain an adjusted interface element, so that the adjusted interface element better matches the second terminal device. Finally, the first terminal device may adjust, in each sub-area, a location of an adjusted interface element in the sub-area based on the quantity of elements corresponding to the sub-area, to obtain the second interface.

In addition, in a process of adjusting an adjusted interface element, the first terminal device may further obtain importance of each adjusted interface element, and arrange, based on the importance of each adjusted interface element, an adjusted interface element whose importance parameter has a largest value at a center area of a sub-area.

The first terminal device may perform a plurality of adjustment operations such as scaling, rotation, and displacement on an interface element. An adjustment operation is not limited in this embodiment of this application.

For example, as shown in FIG. 5, if an interface category shown in FIG. 5 is the category 1, the display area of the second terminal device may be divided into three sub-areas, that is, upper, middle, and lower sub-areas. The upper sub-area occupies 17% of the display area, the middle sub-area occupies 50% of the display area, and the lower sub-area occupies 33% of the display area. The song title and/or a singer name may be located in the upper sub-area, the cover and/or lyrics may be located in the middle sub-area, and a plurality of interface elements including the play control, the menu control, the previous control, the next control, the repeat play control, and the seek bar may be located in the lower sub-area, namely, a control area. Interface elements other than the seek bar may all be arranged under the seek bar or separately arranged on upper and lower sides of the seek bar based on a quantity of interface elements in the lower sub-area.

For example, if the quantity of interface elements in the lower sub-area is less than an element threshold, the interface elements may be arranged at equal intervals under the seek bar. If the quantity of interface elements in the lower sub-area is greater than or equal to the element threshold, the interface elements may be separately arranged on the upper and lower sides of the seek bar.

It is assumed that the preset element threshold is 6 and the quantity of interface elements other than the seek bar in the lower sub-area shown in FIG. 5 is 5. In this case, the quantity of interface elements is less than the element threshold, and the interface elements other than the seek bar may be arranged at equal intervals under the seek bar. In addition, in an arrangement process, the most important play control may be arranged in the middle; then, the second most important previous and next controls are respectively arranged on the left and right sides of the play control; and finally the repeat play control may be arranged on the leftmost side, and the menu control may be arranged on the rightmost side.

It should be noted that a size of an area occupied by each sub-area in the display area is set according to the preset arrangement rule and an element threshold for each sub-area may be obtained through learning of a use habit of the user. Similarly, the importance of each interface element may also be obtained based on a frequency of triggering the interface element by the user. For example, a higher triggering frequency indicates higher importance of the interface element. Manners of determining the size of the area occupied by each sub-area in the display area, the element threshold for each sub-area, and the importance of each interface element are not limited in this embodiment of this application.

In addition, in actual application, there may be a plurality of types of second terminal devices, and interface layouts of the terminal devices are different.

For example, as shown in FIG. 14A and FIG. 14B, a non-overlay layout is used as an example. An upper-middle-down layout may be used for a television, a notebook computer, and a tablet computer. A left-right layout may be used for an in-vehicle terminal device. A layer differentiation layout may be used for a watch. For example, a view area is disposed at a bottom layer, and an up-down floating layout is used. As shown in FIG. 15A and FIG. 15B, an overlay layout is used as an example. For a television, a notebook computer, a tablet computer, an in-vehicle terminal device, or a watch, a view area may be disposed at a bottom layer, and an upper-down floating layout is disposed at an upper layer. For example, the overlay layout is used for a map application loaded by the in-vehicle terminal device. In addition, as shown in FIG. 16A and FIG. 16B, an overlay scrolling layout is used as an example. An up-down layout manner may be used for a television, and a left-right layout manner may be used for a notebook computer, a tablet computer, and an in-vehicle terminal device.

Step 405: Send the second interface to the second terminal device, so that the second terminal device displays the second interface.

After generating the second interface, the first terminal device may send the second interface to the second terminal device, so that the second terminal device can display the second interface, and present, to the user, the second interface that matches a screen of the second terminal device.

It should be noted that, in actual application, step 403 and step 404 may be performed by the first terminal device, that is, the first terminal device may arrange the interface element based on the interface category, to obtain the second interface; or step 403 and step 404 may be performed by the second terminal device, that is, the second terminal device may receive the interface category and the interface element that are sent by the first terminal device, and arrange the interface element based on the interface category and the second device information, to generate and display the second interface. A process in which the second terminal device generates the second interface is similar to the process in step 403. Details are not described herein again.

Step 406: Update the interface recognition model based on the obtained feedback information.

After the first terminal device sends the second interface to the second terminal device, so that the second terminal device displays the second interface, the first terminal device may detect an operation triggered by the user, and obtain the feedback information input by the user for the second interface, so that the first terminal device can update the interface recognition model based on the obtained feedback information.

In a possible implementation, after generating the second interface, the first terminal device may first display a feedback interface to the user, and detect an input operation triggered by the user. If the input operation is detected, the first terminal device may obtain feedback information input by the user. After the feedback information is recorded, if the current recorded feedback information and previously recorded feedback information meet a preset update condition, the first terminal device may update the interface recognition model based on a plurality of pieces of recorded feedback information.

Further, in a process of determining whether the feedback information meets the update condition, the first terminal device may obtain a quantity of feedback times in the plurality of pieces of recorded feedback information, and compare the quantity of feedback times with a preset feedback threshold. If the quantity of feedback times is greater than or equal to the feedback threshold, the first terminal device may update the interface recognition model based on the plurality of pieces of recorded feedback information, to determine the interface category more accurately by using an updated interface recognition model.

It should be noted that the interface layout method provided in this embodiment of this application may be not only applied to an interface projection scenario, but also applied to an interface development scenario. Correspondingly, if the interface layout method is applied to the interface development scenario, manual interface element extraction may be performed in the first interface before step 401.

Optionally, the first terminal device may perform interface element extraction in the first interface based on an extraction operation triggered by the user, to obtain a plurality of interface elements, and then generate element information of the plurality of interface elements based on a supplementing operation triggered by the user, so that the first terminal device can perform interface layout in a subsequent step based on the generated element information.

For example, the first terminal device may load an integrated development environment (Integrated Development Environment, IDE), and input an image corresponding to the first interface and the interface attribute of the first interface into the IDE based on an input operation triggered by the user, that is, input a first interface image and resolution corresponding to the first interface into the IDE. Then, as shown in FIG. 17, the first terminal device may detect a box selection operation triggered by the user on an interface element, and select the plurality of interface elements in the first interface by using boxes based on the box selection operation (shown as dashed boxes in FIG. 17), to obtain the plurality of interface elements.

An area occupied by each interface element may be determined based on a box used to select the interface element. For example, coordinates corresponding to four edges of the box may be determined as corresponding upper, lower, left, and right coordinates of the interface element in the first interface based on the four edges of the box.

In addition, the first terminal device may further remind, based on a preset table, the user to supplement each interface element, and generate element information of each interface element. For example, the first terminal device may obtain, based on an input operation triggered by the user, a plurality of pieces of information such as a name and an element type of each interface element, to generate the element information of the interface element, and generate an overall element list based on the element information of the plurality of interface elements.

In addition, the first terminal device may further obtain, based on an operation triggered by the user, the second device information of the second terminal device input by the user. For example, the second device information may include a name, screen resolution, and landscape/portrait mode of the second terminal device.

After obtaining the interface element, the first terminal device may perform operations similar to step 402 and step 403 to generate the second interface, and then may detect an adjustment operation triggered by the user, to adjust a size and a location of each interface element in the second interface, and record the adjustment operation triggered by the user. In this way, the first terminal device can adjust the preset arrangement rule based on the recorded adjustment operation. To be specific, the first terminal device may record an adjustment operation triggered by the user on at least one interface element in the second interface, and adjust the arrangement rule based on the adjustment operation.

For example, FIG. 18 shows an IDE interface displayed on a first terminal device. As shown in FIG. 18, a left side shows a first interface in which interface elements have been selected by using boxes; an upper part on the right side records attribute information of each interface element, such as a name, a location, and a type; a middle part on the right side shows a name "mobile phone" of the first terminal device, a name "television" of a second terminal device, screen resolution "720*1080" of the first terminal device, screen resolution "2244*1080" of the second terminal device, landscape/portrait mode "1" (indicating a portrait screen) of the first terminal device, and landscape/portrait mode "2" (indicating a landscape screen) of the second terminal device; a lower part on the right side shows a generated second interface. The first terminal device may further adjust each interface element in the second interface based on an adjustment operation triggered by the user.

In conclusion, according to the interface layout method provided in this embodiment of this application, the first terminal device receives the projection instruction that instructs the first terminal device to perform screen projection to the second terminal device, and generates, based on the second device information and the interface information of the first interface displayed on the first terminal device, the second interface to be displayed on the second terminal device, where the second device information is used to indicate the screen size and the screen status of the second terminal device. In this way, the second terminal device can display the second interface that matches the second terminal device, and the user can conveniently control the second interface via the second terminal device. This avoids a problem that the user cannot conveniently control a screen projection interface, improves convenience of controlling, by the user, the second interface via the second terminal device, and improves consistency between control operations performed by the user on different terminal devices.

In addition, for a user performing interface development, a rearranged second interface may be provided to the user, and each interface element in the second interface is re-adjusted based on an operation triggered by the user, so that the user can obtain the second interface without a manual operation. This reduces time spent by the user in interface development, and improves interface development efficiency of the user.

In addition, in a process of determining the interface category by using the interface recognition model, feature extraction is first performed on the element information of the interface element to obtain the interface feature data, and a calculation amount required for determining the interface category can be reduced by using the interface feature data. This improves efficiency of determining the interface category.

Further, the feedback information is obtained, and the interface recognition model is updated based on the feedback information. This improves accuracy of recognizing the interface type by using the interface recognition model.

Finally, all the interface elements in the first interface are filtered and rearranged, only an interface element that can be displayed on the second terminal device is extracted, and the extracted interface element is arranged based on the screen size and the screen direction of the second terminal device, so that the generated second interface better matches the second terminal device. This improves aesthetic visibility of the second interface.

It should be understood that sequence numbers of the steps do not mean an execution sequence in the foregoing embodiments. The execution sequence of the processes should be determined based on functions and internal logic of the processes, and should not constitute any limitation on the implementation processes of the embodiments of this application.

Corresponding to the interface layout method in the foregoing embodiments, FIG. 19 is a structural block diagram of an interface layout apparatus according to an embodiment of this application. For ease of description, only parts related to the embodiments of this application is shown in the figure.

As shown in FIG. 19, the apparatus includes:

a receiving module 1901, configured to receive a screen projection instruction, where the screen projection instruction is used to instruct a first terminal device to perform screen projection to a second terminal device; and
a generation module 1902, configured to generate, based on interface information of a first interface and second device information, a second interface to be displayed on the second terminal device, where the first interface is an interface displayed on the first terminal device, and the second device information is used to indicate a screen size and a screen status of the second terminal device.

Optionally, the generation module 1902 is specifically configured to: obtain the interface information of the first interface and the second device information, where the interface information of the first interface includes element information of at least one interface element in the first interface, and the element information is used to indicate a name and a type of the interface element, and a location of the interface element in the first interface; perform recognition based on the element information of the at least one interface element by using a pre-trained interface recognition model, to determine an interface category; and arrange the at least one interface element based on the interface category and the second device information, to obtain the second interface.

Optionally, the interface information of the first interface further includes an interface attribute, and the interface attribute is used to indicate an interface size and an interface direction of the first interface.

The generation module 1902 is further specifically configured to: perform feature extraction on at least one piece of the element information based on the interface attribute, to obtain interface feature data; and input the interface feature data into the interface recognition model, and recognize the interface feature data by using the interface recognition model, to obtain the interface category output from the interface recognition model.

Optionally, the generation module 1902 is further specifically configured to: divide, based on the interface category, a display area of the second terminal device, to obtain a plurality of sub-areas, where the display area is indicated by the second device information; determine an interface element arranged in each sub-area; and adjust each interface element in each sub-area based on a size of the display area indicated by the second device information and a quantity of interface elements arranged in each sub-area, to obtain the second interface.

Optionally, the generation module 1902 is further specifically configured to: determine the quantity of interface elements in each sub-area; adjust a size and a direction of each interface element in each sub-area based on the size of the display area, a preset arrangement rule, and the quantity of elements corresponding to the sub-area, to obtain an adjusted interface element; and adjust, in each sub-area, a location of an adjusted interface element in the sub-area based on the quantity of elements corresponding to the sub-area, to obtain the second interface.

Optionally, as shown in FIG. 20, the apparatus further includes:

a sending module 1903, configured to send the second interface to the second terminal device, so that the second terminal device displays the second interface.

Optionally, as shown in FIG. 20, the apparatus further includes:

an obtaining module 1904, configured to obtain feedback information, where the feedback information is information fed back by a user on the second interface displayed on the second terminal device; and
an updating module 1905, configured to: if the feedback information meets a preset update condition, update the interface recognition model based on the feedback information.

Optionally, as shown in FIG. 20, the apparatus further includes:

an extraction module 1906, configured to perform interface element extraction in the first interface based on an extraction operation triggered by a user, to obtain a plurality of interface elements; and
a supplementing module 1907, configured to generate element information of the plurality of interface elements based on a supplementing operation triggered by the user.

The apparatus further includes:

a recording module 1908, configured to record an adjustment operation triggered by a user on at least one interface element in the second interface; and
an adjustment module 1909, configured to adjust the arrangement rule based on the adjustment operation.

In conclusion, according to the interface layout apparatus provided in this embodiment of this application, the first terminal device receives the projection instruction that instructs the first terminal device to perform screen projection to the second terminal device, and generates, based on the second device information and the interface information of the first interface displayed on the first terminal device, the second interface to be displayed on the second terminal device, where the second device information is used to indicate the screen size and the screen status of the second terminal device. In this way, the second terminal device can display the second interface that matches the second terminal device, and the user can conveniently control the second interface via the second terminal device. This avoids a problem that the user cannot conveniently control a screen projection interface, improves convenience of controlling, by the user, the second interface via the second terminal device, and improves consistency between control operations performed by the user on different terminal devices.

An embodiment of this application further provides a terminal device. The terminal device includes a memory, a processor, and a computer program that is stored in the memory and that can be run on the processor. When executing the computer program, the processor implements steps in any one of the foregoing interface layout method embodiments.

An embodiment of this application further provides a computer-readable storage medium. The computer-readable storage medium stores a computer program. When the computer program is executed by a processor, steps in any one of the foregoing interface layout method embodiments are implemented.

FIG. 21 is a schematic diagram of a structure of a terminal device according to an embodiment of this application. As shown in FIG. 21, the terminal device 21 in this embodiment includes: at least one processor 211 (only one processor is shown in FIG. 21), a memory 212, and a computer program 212 that is stored in the memory 212 and that can be run on the at least one processor 211. When executing the computer program 212, the processor 211 implements steps in any one of the foregoing interface layout method embodiments.

The terminal device 21 may be a computing device such as a desktop computer, a notebook computer, a palmtop computer, or a cloud server. The terminal device may include but is not limited to including the processor 211 and the memory 212. Persons skilled in the art may understand that FIG. 21 is merely an example of the terminal device 21, and does not constitute a limitation on the terminal device 21. The terminal device may include more or fewer components than those shown in the figure, or some components may be combined, or different components may be used. For example, the terminal device may further include an input/output device, a network access device, or the like.

The processor 211 may be a central processing unit (Central Processing Unit, CPU). The processor 211 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, a discrete hardware component, or the like. The general-purpose processor may be a microprocessor, or the processor may be any conventional processor or the like.

In some embodiments, the memory 212 may be an internal storage unit of the terminal device 21, for example, a hard disk or memory of the terminal device 21. In some other embodiments, the memory 212 may alternatively be an external storage device of the terminal device 21, for example, a removable hard disk, a smart media card (Smart Media Card, SMC), a secure digital (Secure Digital, SD) card, a flash memory card (Flash Card), or the like that is equipped with the terminal device 21. Further, the memory 212 may alternatively include both an internal storage unit and an external storage device of the terminal device 21. The memory 212 is configured to store an operating system, an application, a boot loader (BootLoader), data, and another program, for example, program code of the computer program. The memory 212 may be further configured to temporarily store data that has been output or is to be output.

Persons skilled in the art may clearly understand that, for the purpose of convenient and brief description, division into the foregoing functional units or modules is merely used as an example for description. In actual application, the foregoing functions may be allocated to different functional units or modules for implementation based on a requirement. That is, an inner structure of the apparatus is divided into different functional units or modules to implement all or some of the foregoing functions. Functional units or modules in the embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely used for ease of differentiation, but are not intended to limit the protection scope of this application. For a specific working process of the units or modules in the foregoing system, refer to a corresponding process in the foregoing method embodiments. Details are not described herein again.

The foregoing embodiments are described from respective focuses. For a part that is not described or recorded in detail in an embodiment, refer to related descriptions in other embodiments.

Persons of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In the embodiments provided in this application, it should be understood that the disclosed apparatus and method may be implemented in other manners. For example, the described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions in the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, all or some of the procedures of the method in the embodiments of this application may be implemented by a computer program instructing related hardware. The computer program may be stored in a computer-readable storage medium. When the computer program is executed by a processor, steps in the foregoing method embodiments may be implemented. The computer program includes computer program code. The computer program code may be in a source code form, an object code form, an executable file form, some intermediate forms, or the like. The computer-readable medium may include at least any entity or apparatus that can carry the computer program code to a terminal device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium may not be the electrical carrier signal or the telecommunication signal according to the legislation and patent practices.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

**Claims**

1. An interface layout method, applied to a first terminal device, wherein the first terminal device is connected to a second terminal device, and the method comprises:

   receiving a screen projection instruction, wherein the screen projection instruction is used to instruct the first terminal device to perform screen projection to the second terminal device; and
   generating, based on interface information of a first interface and second device information, a second interface to be displayed on the second terminal device, wherein the first interface is an interface displayed on the first terminal device, and the second device information is used to indicate a screen size and a screen status of the second terminal device.

2. The interface layout method according to claim 1, wherein the generating, based on interface information of a first interface and second device information, a second interface to be displayed on the second terminal device comprises:

   obtaining the interface information of the first interface and the second device information, wherein the interface information of the first interface comprises element information of at least one interface element in the first interface, and the element information is used to indicate a name and a type of the interface element, and a location of the interface element in the first interface;
   performing recognition based on the element information of the at least one interface element by using a pre-trained interface recognition model, to determine an interface category; and
   arranging the at least one interface element based on the interface category and the second device information, to obtain the second interface.

3. The interface layout method according to claim 2, wherein the interface information of the first interface further comprises an interface attribute, and the interface attribute is used to indicate an interface size and an interface direction of the first interface; and
   the performing recognition based on the element information of the at least one interface element by using a pre-trained interface recognition model, to determine an interface category comprises:

   performing feature extraction on at least one piece of the element information based on the interface attribute, to obtain interface feature data; and
   inputting the interface feature data into the interface recognition model, and recognizing the interface feature data by using the interface recognition model, to obtain the interface category output from the interface recognition model.

4. The interface layout method according to claim 2, wherein the arranging the at least one interface element based on the interface category and the second device information, to obtain the second interface comprises:

   dividing, based on the interface category, a display area of the second terminal device, to obtain a plurality of sub-areas, wherein the display area is indicated by the second device information;
   determining an interface element arranged in each sub-area; and
   adjusting each interface element in each sub-area based on a size of the display area indicated by the second device information and a quantity of interface elements arranged in each sub-area, to obtain the second interface.

**5.** The interface layout method according to claim 4, wherein the adjusting each interface element in each sub-area based on a size of the display area indicated by the second device information and a quantity of interface elements arranged in each sub-area, to obtain the second interface comprises:

determining the quantity of interface elements in each sub-area;
adjusting a size and a direction of each interface element in each sub-area based on the size of the display area, a preset arrangement rule, and the quantity of interface elements in the sub-area, to obtain an adjusted interface element; and
adjusting, in each sub-area, a location of an adjusted interface element in the sub-area based on the quantity of interface elements in the sub-area, to obtain the second interface.

**6.** The interface layout method according to any one of claims 1 to 5, wherein after the generating, based on interface information of a first interface and second device information, a second interface to be displayed on the second terminal device, the method further comprises:
sending the second interface to the second terminal device, so that the second terminal device displays the second interface.

**7.** The interface layout method according to claim 6, wherein after the sending the second interface to the second terminal device, the method further comprises:

obtaining feedback information, wherein the feedback information is information fed back by a user on the second interface displayed on the second terminal device; and
if the feedback information meets a preset update condition, updating the interface recognition model based on the feedback information.

**8.** The interface layout method according to any one of claims 1 to 5, wherein before the generating, based on interface information of a first interface and second device information, a second interface to be displayed on the second terminal device, the method further comprises:

performing interface element extraction in the first interface based on an extraction operation triggered by a user, to obtain a plurality of interface elements; and
generating element information of the plurality of interface elements based on a supplementing operation triggered by the user.

**9.** The interface layout method according to any one of claims 1 to 5, wherein after the generating, based on interface information of a first interface and second device information, a second interface to be displayed on the second terminal device, the method further comprises:

recording an adjustment operation triggered by a user on at least one interface element in the second interface; and
adjusting the arrangement rule based on the adjustment operation.

**10.** An interface layout apparatus, applied to a first terminal device, wherein the first terminal device is connected to a second terminal device, and the interface layout apparatus comprises:

a receiving module, configured to receive a screen projection instruction, wherein the screen projection instruction is used to instruct the first terminal device to perform screen projection to the second terminal device; and
a generation module, configured to generate, based on interface information of a first interface and second device information, a second interface to be displayed on the second terminal device, wherein the first interface is an interface displayed on the first terminal device, and the second device information is used to indicate a screen size and a screen status of the second terminal device.

**11.** An interface layout system, comprising a first terminal device and a second terminal device, wherein the first terminal device is connected to the second terminal device;

the first terminal device receives a screen projection instruction, wherein the screen projection instruction is used to instruct the first terminal device to perform screen projection to the second terminal device;
the first terminal device generates, based on interface information of a first interface and second device information, a second interface to be displayed on the second terminal device, wherein the first interface is an interface displayed on the first terminal device, and the second device information is used to indicate a screen size and a screen status of the second terminal device;

the first terminal device sends the second interface to the second terminal device; and

the second terminal device receives and displays the second interface.

12. A terminal device, comprising a memory, a processor, and a computer program that is stored in the memory and that is run on the processor, wherein when executing the computer program, the processor implements the method according to any one of claims 1 to 9.

13. A computer-readable storage medium, wherein the computer-readable storage medium stores a computer program, and when the computer program is executed by a processor, the method according to any one of claims 1 to 9 is implemented.

FIG. 1

Mobile phone 200

Antenna 1                    Antenna 2

251                          252

| Mobile communications module 2G/3G/4G/5G | Wireless communications module BT/WLAN/ GNSS/NFC/IR/FM |

270

270A — Speaker

270B — Receiver

270C — Microphone

270D — Headset jack

Audio module

280

Sensor module

210

280A — Gyroscope sensor

280B — Acceleration sensor

280G — Optical proximity sensor

280H — Fingerprint sensor

280K — Touch sensor

294 — Displays 1 to N

293 — Cameras 1 to N

292 — Indicator

291 — Motor

290 — Button

Processor

295 — SIM card interfaces 1 to N

220 — External memory interface

221

Internal memory

2211 — Account verification module

2212 — Priority comparison module

2213 — Status synchronization module

230 — USB port

Charging input

240

Charging management module

241 — Power management module

242 — Battery

FIG. 2

| Application layer | Camera | Calendar | Maps | WLAN | Music | Messages |
| | Gallery | Phone | Navigation | Bluetooth | Videos | Projection |

| Application framework layer | Window manager | Content provider | Phone manager | Resource manager |
| | Notification manager | View system | ... | |

| System library | Surface manager | Three-dimensional graphics processing library | Android runtime (Android Runtime) |
| | Two-dimensional graphics engine | Media library | ... | |

| Kernel layer | Display driver | Camera driver | |
| | Audio driver | Sensor driver | ... |

FIG. 3

Receive a screen projection instruction 401

Obtain interface information of a first interface and second device information 402

Perform recognition based on element information of at least one interface element by using a pre-trained interface recognition model, to determine an interface category 403

Arrange the at least one interface element based on the interface category and the second device information, to obtain a second interface 404

Send the second interface to a second terminal device, so that the second terminal device displays the second interface 405

Update the interface recognition model based on obtained feedback information 406

FIG. 4

AAA ⌇ 501

502

503

00:45 ────○──────────────────────── 04:40

504    505    506    507    508

FIG. 5

FIG. 6

FIG. 7

FIG. 8-a

FIG. 8-b

FIG. 9-a

FIG. 9-b

FIG. 10

FIG. 11

FIG. 12

FIG. 13

TO
FIG. 14B
~

Tablet computer

AAA

00:45    04:40

Notebook computer

AAA

00:45    04:40

Television

AAA

00:45    04:40

FIG. 14A

In-vehicle terminal device

AAA

00:45 ⊙━━━━━━ 04:40

CONT.
FROM
FIG. 14A

Watch

AAA

FIG. 14B

TO
FIG. 15B
~

Tablet computer

Notebook computer

Television

FIG. 15A

EP 4 080 345 A1

In-vehicle terminal device

Go straight
for 50
meters, and
turn left

Remaining
distance:
5 km

Watch

AAA

FIG. 15B

Television

WeChat for cars has arrived

Travel guide

Handling process

| Notes | | To-do |

Notebook computer

| Notes | WeChat for cars has arrived |

Travel guide

| To-do |

Handling process

Tablet computer

| Notes | WeChat for cars has arrived |

Travel guide

| To-do |

Handling process

TO FIG. 16B

FIG. 16A

Watch

Notes

WeChat for
cars has
arrived

In-vehicle terminal device

To-do

Notes

WeChat for cars has arrived

Travel guide

Handling process

CONT.
FROM
FIG. 16A

FIG. 16B

FIG. 17

[{"background":14215141,"elementType":"UI","groups":[{"group Name":"Bars","uiInfos":[{"label":0,"labelName":"title","uiRect": {"bottom":170,"left":168,"right":571,"top":102},"viewId":684}, {"label":1,"labelName":"seek","uiRect":{"bottom":1992,"left":0, "right":1080,"top":1924},"viewId":670},{"label":2,"labelName": "repeat","uiRect":{"bottom":2167,"left":84,"right":204,"top":2047}, "viewId":675},{"label":3,"labelName":"pre","uiRect":{"bottom": 2167,"left":279,"right":399,"top":2047},"viewId":676},{"label":4, "labelName":"play","uiRect":{"bottom":2212,"left":435,"right":645, "top":2002},"viewId":677},{"label":5,"labelName":"next","uiRect": {"bottom":2167,"left":681,"right":801,"top":2047},"viewId":678}, {"label":6,"labelName":"menu","uiRect":{"bottom":2167,"left":876, "right":996,"top":2047},"viewId":679},{"label":7"labelName":"cover ","uiRect":{"bottom":1255,"left":0,"right":1080,"top":451},"viewId": 618}]}]}]}

| Name of the first terminal device: Mobile phone | Resolution of the first terminal device: 720*1280 | Landscape/ portrait mode: 1 |
| --- | --- | --- |
| Name of the second terminal device: Television | Resolution of the second terminal device: 2244*1080 | Landscape/ portrait mode: 2 |

FIG. 18

Receiving module 1901

Generation module 1902

FIG. 19

Extraction module 1906

Supplementing module 1907

Obtaining module 1904

Receiving module 1901

Update module 1905

Generation module 1902

Adjustment module 1909

Sending module 1903

Recording module 1908

FIG. 20

21

211

212

Memory

213

Processor

Computer program

Terminal device

FIG. 21

## INTERNATIONAL SEARCH REPORT

| International application No. |
| --- |
| **PCT/CN2020/125607** |

| A. | CLASSIFICATION OF SUBJECT MATTER |
| --- | --- |
| | G06F 3/14(2006.01)i; G06F 9/451(2018.01)i; G06K 9/62(2006.01)i |

According to International Patent Classification (IPC) or to both national classification and IPC

| B. | FIELDS SEARCHED |
| --- | --- |

Minimum documentation searched (classification system followed by classification symbols)

G06F3/-;G06F9/-;G06K9/-

Documentation searched other than minimum documentation to the extent that such documents are included in the fields searched

Electronic data base consulted during the international search (name of data base and, where practicable, search terms used)

CNABS; CNTXT; VEN; USTXT; WOTXT; TWABS; EPTXT; CNKI: 投屏, 屏幕, 投射, 分享, 界面, 页面, 元素, 调整, 尺寸, 状态, 方向, 横, 竖, 模型, 识别, screen cast, screen, projection, share, interface, page, element, adjust, size, status, direction, landscape, portrait, model, recognize

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 111399789 A (HUAWEI TECHNOLOGIES CO., LTD.) 10 July 2020 (2020-07-10) entire document | 1-13 |
| Y | CN 110381195 A (HUAWEI TECHNOLOGIES CO., LTD.) 25 October 2019 (2019-10-25) description paragraphs 49-173 | 1-3, 6-13 |
| Y | CN 110377250 A (HUAWEI TECHNOLOGIES CO., LTD.) 25 October 2019 (2019-10-25) description paragraphs 100-163 | 1-3, 6-13 |
| Y | CN 108874341 A (SHENZHEN DONGXIANG TONGREN TECH CO., LTD.) 23 November 2018 (2018-11-23) description, paragraphs 32-61, figures 3-7B | 1-3, 6-13 |
| Y | CN 108268225 A (LETV AUTOMOBILE (BEIJING) CO., LTD.) 10 July 2018 (2018-07-10) description, paragraphs 27-41 | 1-3, 6-13 |
| Y | CN 109508189 A (BEIJING QIYI CENTURY SCIENCE & TECHNOLOGY CO., LTD.) 22 March 2019 (2019-03-22) description, paragraphs 86-134 | 2-3, 6-9, 12-13 |
| A | CN 109448709 A (HUAWEI TECHNOLOGIES CO., LTD.) 08 March 2019 (2019-03-08) entire document | 1-13 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 January 2021** | **05 February 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

| International application No. |
| --- |
| **PCT/CN2020/125607** |

**C.      DOCUMENTS CONSIDERED TO BE RELEVANT**

| Category* | Citation of document, with indication, where appropriate, of the relevant passages | Relevant to claim No. |
| --- | --- | --- |
| A | US 2013159880 A1 (INTERNATIONAL BUSINESS MACHINES CORPORATION) 20 June 2013 (2013-06-20) entire document | 1-13 |

Form PCT/ISA/210 (second sheet) (January 2015)

**INTERNATIONAL SEARCH REPORT**
**Information on patent family members**

International application No.

**PCT/CN2020/125607**

| Patent document cited in search report | | | Publication date (day/month/year) | Patent family member(s) | | | Publication date (day/month/year) |
|---|---|---|---|---|---|---|---|
| CN | 111399789 | A | 10 July 2020 | None | | | |
| CN | 110381195 | A | 25 October 2019 | WO | 2020244495 | A1 | 10 December 2020 |
| CN | 110377250 | A | 25 October 2019 | WO | 2020244500 | A1 | 10 December 2020 |
| CN | 108874341 | A | 23 November 2018 | None | | | |
| CN | 108268225 | A | 10 July 2018 | None | | | |
| CN | 109508189 | A | 22 March 2019 | None | | | |
| CN | 109448709 | A | 08 March 2019 | WO | 2020078300 | A1 | 23 April 2020 |
| US | 2013159880 | A1 | 20 June 2013 | US | 9124657 | B2 | 01 September 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020101068011